# EUROPÄISCHE PATENTANMELDUNG

(11) **EP 1 145 618 A1**
(43) Veröffentlichungstag der Anmeldung: **17.10.2001**
(21) Anmeldenummer: 01108844.0
(22) Anmeldetag: 09.04.2001
(51) Int. Cl.: A01D 75/18

(54) **Vorrichtung zum Detektieren von Fremdkörpern im Einzugsbereich eines Häckslers**

(30) Priorität: 15.04.2000 DE 10018826
(71) Anmelder: SAME DEUTZ-FAHR S.P.A., 24047 Treviglio (Bergamo) (IT)
(72) Erfinder: Nusser, Martin, 89129 Langenau (DE)
(74) Vertreter: Quinterno, Giuseppe

(57) **Zusammenfassung**

Es wird eine Vorrichtung zum Detektieren von Fremdkörpern im Einzugsbereich eines Häckslers mit verbeserter Detektionsrate vorgeschlagen. Ein über den Förderkanal (5) hinausragender Spulenkörper (21) erzeugt ein elektromagnetisches Feld, welches einen Querschnitt des Förderkanals (5) vollständig durchdringt und somit eine sichere Detektion von im Förderkanal (5) befindlichen Fremdkörpern ermöglicht.

## Beschreibung

Die Erfindung betrifft eine Vorrichtung zum Detektieren von Fremdkörpern im Einzugsbereich eines Häckslers, mit einem Förderkanal, mit mindestens einer den Querschnitt des Förderkanals begrenzenden Walze, mit mindestens einer den Förderkanal begrenzenden Wand und mit einem außerhalb des Förderkanals angeordneten Spulenkörper zur Erzeugung eines sich in den Förderkanal (5) erstreckenden elektromagnetischen Feldes.

Diese Vorrichtung ist beispielsweise aus dem Häcksler Typ "Maral 150" der Landtechnik AG, Schönebeck bekannt. Dieser Häcksler weist einen Förderkanal mit insgesamt acht Einzugs- und Vorpresswalzen auf, welche das Erntegut zu einer Häckseltrommel transportieren. Dabei entspricht die Länge der Einzugs- und Vorpresswalzen der lichten Weite des Förderkanals. In einer der Einzugswalzen ist ein Spulenkörper drehfest angeordnet, welcher, wenn er von elektrischem Strom durchflossen wird, ein elektromagnetisches Feld erzeugt. Dieses elektromagnetische Feld durchdringt den Querschnitt des Förderkanals. Fremdkörper insbesondere aus Metall, welche mit dem Erntegut in das elektromagnetische Feld im Förderkanal gelangen, bewirken eine signifikante Änderung des elektromagnetischen Feldes. Wenn eine solche Änderung detektiert wird, wird die Förderung des Ernteguts angeschaltet. Dadurch wird verhindert, dass die Fremdkörper zur Häckseltrommel gelangen und dort möglicherweise die Messer der Häckseltrommel und/oder die Gegenschneide beschädigen.

Nachteilig an dieser Vorrichtung ist, dass das elektromagnetische Feld nicht den gesamten Querschnitt des Förderkanals durchdringt; insbesondere an den Seiten des Förderkanals ist kein oder nur ein sehr schwaches elektromagnetisches Feld vorhanden. Weil das Schneidwerk des Häckslers sehr viel breiter als der Förderkanal ist und das Erntegut nach dem Abschneiden seitlich zusammengedrückt wird, treten in den Seitenbereichen des Förderkanals überdurchschnittlich häufig Fremdkörper auf. Beide Effekte verringern die Detektionsrate von Fremdkörpern.

Der Erfindung liegt die Aufgabe zugrunde, eine verbesserte Vorrichtung zum Detektieren von Fremdkörpern im Einzugsbereich eines Häckslers mit gegenüber dem Stand der Technik erhöhter Detektionsrate bereitzustellen.

Diese Aufgabe wird erfindungsgemäß gelöst durch eine Vorrichtung zum Detektieren von Fremdkörpern im Einzugsbereich eines Häckslers, mit einem Förderkanal, mit mindestens einer den Querschnitt des Förderkanals begrenzenden Walze, mit mindestens einer den Förderkanal begrenzenden Wand und mit einem außerhalb des Förderkanals angeordneten Spulenkörper zur Erzeugung eines den Förderkanal durchdringenden elektromagnetischen Feldes, wobei die Länge des Spulenkörpers größer als die parallel zur Längsachse des Spulenkörpers gemessene lichte Weite des Förderkanals ist.

Durch diese Maßnahme wird erreicht, dass die an den Enden des Spulenkörpers gegenüber dessen Mitte geringere Ausbreitung des elektromagnetischen Felds außerhalb des Förderkanals liegt und somit die vollständige Durchdringung des Förderkanals durch das elektromagnetische Feld des Spulenkörpers gewährleistet ist. In Folge dessen wird der gesamte Querschnitt des Förderkanals auf Fremdkörper überwacht und dementsprechend steigt die Detektionsrate deutlich an. Der zusätzliche Bauaufwand beschränkt sich auf eine Verlängerung des Spulenkörpers.

Bei einer Variante der Erfindung ist der Spulenkörper drehfest in der Walze angeordnet, so dass sich eine besonders kompakte Bauweise ergibt und der Spulenkörper im Bereich eines sehr engen Querschnitts des Förderkanals angeordnet ist. Somit ist nur eine kleine räumliche Ausdehnung des elektromagnetischen Felds erforderlich, um den gesamten Querschnitt des Förderkanals zu durchdringen.

In weiterer Ergänzung der Erfindung ist vorgesehen, dass die Länge der Walze größer als die parallel zur Längsachse des Spulenkörpers gemessene lichte Weite des Förderkanals ist, so dass der Spulenkörper vollständig von der Walze umschlossen wird und somit vor Verschmutzungen und Beschädigungen geschützt ist. Außerdem wird der Abstand der an den Enden der Walze vorhandenen Lagerung derselben zum Förderkanal vergrößert, was die Gefahr von Verschmutzungsneigung der Lager verringert und somit deren Lebensdauer erhöht.

Bei einer anderen Ausführungsform ist der Förderkanal mindestens im Durchdringungsbereich des elektromagnetischen Feldes antimagnetisch, so dass die feststehenden Wände des Kanals und die im Durchdringungsbereich des elektromagnetischen Feldes befindlichen Walzen die Ausbreitung des elektromagnetischen Feldes nicht stören. Dies kann vorteilhafterweise dadurch erreicht werden, dass der Förderkanal mindestens im Durchdringungsbereich aus austenitischem Stahl, insbesondere nicht-rostendem Stahl, Kunststoff und/oder Verbundwerkstoffen besteht.

Bei einer weiteren Ausgestaltung der Erfindung wird der Querschnitt des Förderkanals von zwei gegenüberliegend angeordneten Walzen begrenzt, so dass der Einzug des Ernteguts verbessert wird.

In weiterer Ergänzung der Erfindung ist vorgesehen, dass ein Steuergerät vorhanden ist und dass das Steuergerät beim Auftreten signifikanter zeitlicher Änderungen des elektromagnetischen Feldes, die von einem in den Förderkanal eingezogenen Fremdkörper verursacht werden, die Förderung von Erntegut in den Häcksler abschaltet, so dass eine Beschädigung der nachfolgenden Baugruppen, insbesondere der Häckseltrommel, vermieden wird.

Weitere Vorteile und vorteilhafte Ausgestaltungen der Erfindung sind der nachfolgenden Zeichnung, deren Beschreibung und den Patentansprüchen entnehmbar.

Ein Ausführungsbeispiel des Gegenstands der Erfindung ist in der Zeichnung dargestellt und im Folgenden näher beschrieben. Es zeigen:
- Fig. 1: einen teilweise aufgeschnittenen Häcksler in der Seitenansicht und
- Fig. 2: eine Ansicht von vorne eines Förderkanals mit einem erfindungsgemäßen Spulenkörper.

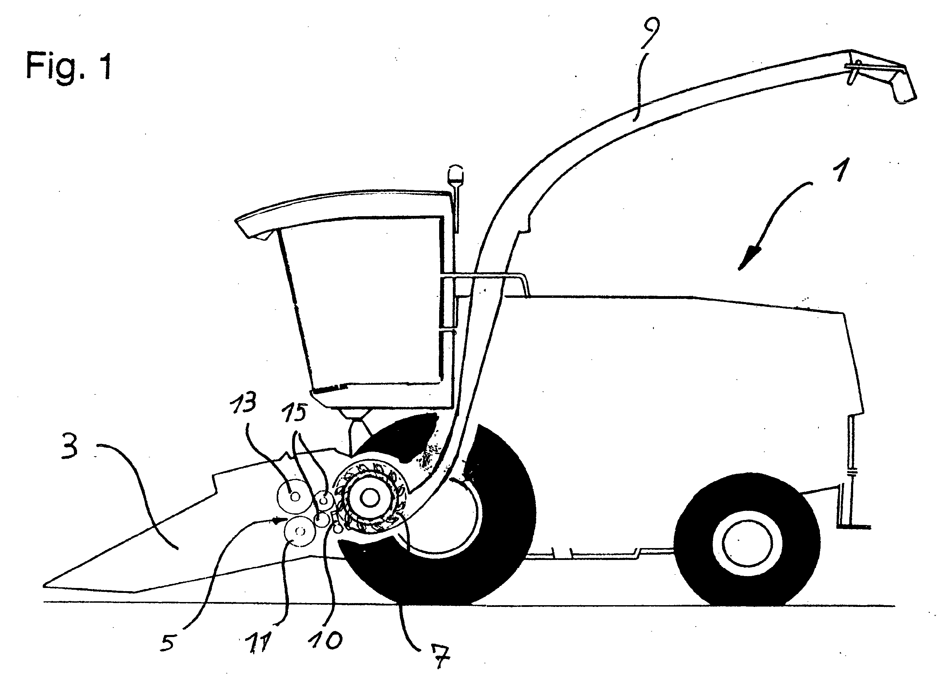

Fig. 1 zeigt einen Häcksler 1. Das in Fig. 1 nicht dargestellte Erntegut wird von einem Schneidwerk 3 abgeschnitten und erreicht über einen freigeschnitten dargestellten Förderkanal 5 eine Häckseltrommel 7, von wo er über einen Auswurfkrümmer 9 auf einen ebenfalls nicht dargestellten Ladewagen oder dergleichen befördert wird. Die Häckseltrommel 7 schneidet an einer Gegenschneide 10 das in Fig. 1 nicht dargestellte Erntegut in kleine Stücke. Der Förderkanal 5 weist zwei Einzugswalzen 11 und 13 sowie zwei Vorpresswalzen 15 auf.

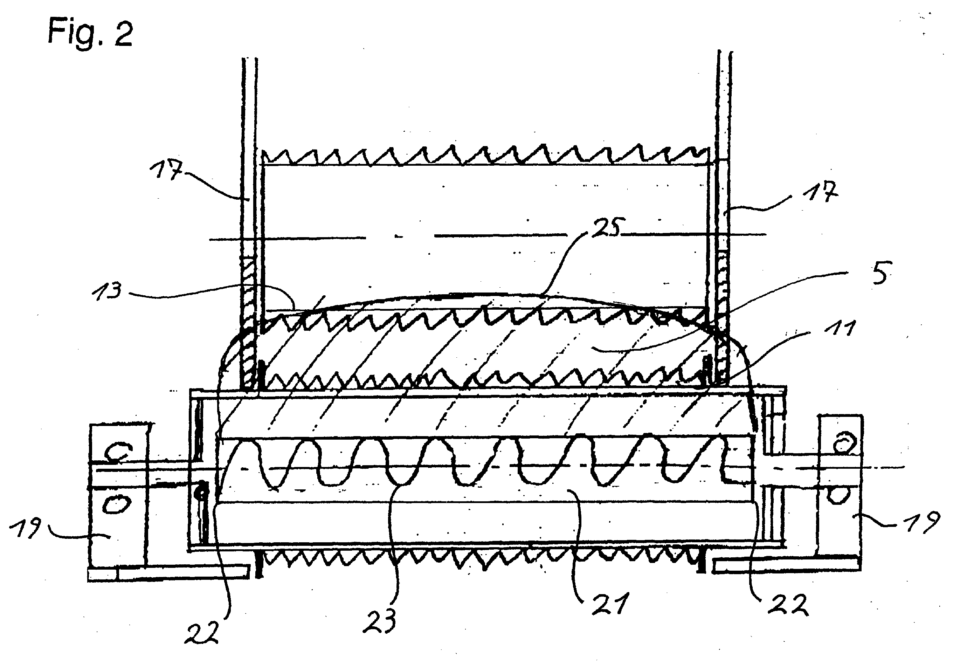

In Fig. 2 ist der Förderkanal 5 in einer Ansicht von vorne dargestellt. Der Querschnitt des Förderkanals 5 wird von einer unteren Einzugswalze 11, einer oberen Einzugswalze 13 sowie Seitenwänden 17 begrenzt. Die untere Einzugswalze 13 ragt in seitlicher Richtung über die Seitenwände 17 hinaus und ist in zwei Lagerböcken 19 drehbar gelagert. Der Antrieb der Einzugswalzen 11 und 13 ist in Fig. 2 nicht dargestellt.

In der unteren Einzugswalze 11 ist ein Spulenkörper 21 drehfest montiert; d. h. auch wenn die untere Einzugswalze angetrieben wird, dreht sich der Spulenkörper 21 nicht.Die Enden 22 ragen seitlich über die Wände 17 hinaus. Der Spulenkörper 21 weist über seine gesamte Länge eine oder mehrere schematisiert dargestellte elektrische Spulen 23 auf, welche ein elektrisches Magnetfeld erzeugen, wenn sie von Strom durchflossen werden. Die elektrische Spule 23 ist so gestaltet, dass das entstehende elektromagnetische Feld den freien Querschnitt des Förderkanals 5 vollständig durchdringt. In Fig. 2 ist die äußere Grenze des elektromagnetischen Felds durch eine Linie 25 dargestellt.

Anhand des Verlaufs der Linie 25 wird deutlich, dass in der Mitte des Spulenkörpers die räumliche Ausdehnung des elektromagnetischen Felds größer ist und zu den Enden 22 des Spulenkörpers 21 hin abfällt. Dieser Effekt ist naturgesetzlich bedingt und kann nur in Grenzen unterdrückt werden. Da, wie in Fig. 2 deutlich zu erkennen ist, der Spulenkörper 21 in seitlicher Richtung deutlich über die Seitenwände 17 und somit über den freien Querschnitt des Förderkanals 5 hinausragt, liegen die Bereiche geringer räumlicher Ausdehnung des elektromagnetischen Feldes an den Enden 22 des Spulenkörpers 21 außerhalb des Förderkanals 5. Somit wird der freie Querschnitt des Förderkanals 5 durch das elektromagnetische Feld vollständig durchdrungen. Wenn das elektromagnetische Feld zur Detektion von Fremdkörpern im Förderkanal 5 herangezogen wird, steigt die Detektionsrate gegenüber herkömmlichen Detektionseinrichtungen, bei denen die untere Einzugswalze 11 die gleichen Abmessungen wie die obere Einzugswalze 13 hat, deutlich an. Somit wir der Häcksler mit größerer Sicherheit vor Beschädigungen durch Fremdkörper geschützt.

Die erfindungsgemäße Detektionseinrichtung kann auch bei anderen stationären oder fahrbaren Erntemaschinen eingesetzt werden.

Alle in der Beschreibung, den nachfolgenden Ansprüchen und der Zeichnung dargestellten Merkmale können sowohl einzeln als auch in beliebiger Kombination miteinander erfindungswesentlich sein.

## Patentansprüche

1. Vorrichtung zum Detektieren von Fremdkörpern im Einzugsbereich eines Häckslers mit einem Förderkanal (5), mit mindestens einer den Querschnitt des Förderkanals (5) begrenzenden Walze (11, 13), mit mindestens einer den Förderkanal (5) begrenzenden Wand (17) und mit einem außerhalb des Förderkanals (5) angeordneten Spulenkörper (21) zur Erzeugung eines sich in den Förderkanal (5) erstreckenden elektromagnetischen Feldes (25), **dadurch gekennzeichnet, dass** die Länge des Spulenkörpers (21) größer als die parallel zur Längsachse des Spulenkörpers (21) gemessene lichte Weite des Förderkanals (5) ist.

2. Vorrichtung nach Anspruch 1, **dadurch gekennzeichnet, dass** der Spulenkörper (21) drehfest in der Walze (11) angeordnet ist.

3. Vorrichtung nach Anspruch 2, **dadurch gekennzeichnet, dass** dass die Länge der Walze (11) größer als die parallel zur Längsachse des Spulenkörpers (21) gemessene lichte Weite des Förderkanals (5) ist.

4. Vorrichtung nach einem der vorhergehenden Ansprüche, **dadurch gekennzeichnet, dass** der Förderkanal (5) mindestens im Durchdringungsbereich des elektromagnetischen Feldes (25) anti-magnetisch ist.

5. Vorrichtung nach Anspruch 4, **dadurch gekennzeichnet, dass** der Förderkanal (5) mindestens im Durchdringungsbereich des elektromagnetischen Feldes (25) aus austenitischem Stahl, insbesondere nichtrostendem Stahl, Kunststoff und/oder Verbundwerkstoffen besteht.

6. Vorrichtung nach einem der vorhergehenden Ansprüche, **dadurch gekennzeichnet, dass** der Förderkanal (5) von zwei gegenüberliegend angeordneten Walzen (11, 13) begrenzt wird.

7. Vorrichtung nach einem der vorhergehenden Ansprüche, **dadurch gekennzeichnet, dass** ein Steuergerät vorhanden ist, und dass das Steuergerät beim Auftreten signifikanter zeitlicher Änderungen des elektromagnetischen Felds (25), die von einem in den Förderkanal (5) eingezogenen Fremdkörper verursacht werden, die Förderung von Erntegut in den Häcksler abschaltet.
